# EUROPÄISCHE PATENTANMELDUNG

(11) **EP 0 580 882 A1**
(43) Veröffentlichungstag der Anmeldung: **02.02.1994**
(21) Anmeldenummer: 92112786.6
(22) Anmeldetag: 27.07.1992
(51) Int. Cl.: B62L 5/00

(54) **Über das Tretlager aktivierte Fahrradrücktrittbremse**

(71) Anmelder: Heise, Dr. Arend, D-26603 Aurich (DE); Heise, Ingo, D-26603 Aurich (DE)
(72) Erfinder: Heise, Dr. Arend, D-26603 Aurich (DE); Heise, Ingo, D-26603 Aurich (DE)

(57) **Zusammenfassung**

Rücktrittbremse für Fahrräder mit direkter Kraftübertragung der Bremskraft vom Tretlager auf die Bremse. Das Kernstück der Erfindung ist ein Zahnrad mit abgeschrägten Zähnen, welches in das Tretlager eingebaut wird, die Kraftübertragung von diesem Zahnrad auf die Bremse erfolgt z. B. mittels eines Schlittens mit federndem Keil oder mit Hilfe einer Zahnstange oder mit Hilfe einer anderen beliebigen Vorrichtung. Die weitere Kraftübertragung erfolgt mittels Seilzug, Kettenzug oder Gestänge auf eine beliebige Art von Fahrradbremse.

## Beschreibung

Die Erfindung bezieht sich auf eine Vorrichtung, die es gestattet, bei Fahrrädern mit Kettenschaltung durch Rückwärtstreten der Pedale eine optimale Bremswirkung zu erzielen. Dabei wird die Kraft für den Bremsvorgang über das Tretlager übertragen. Dies wird erreicht über ein in das Tretlager eingebautes Zahnrad mit abgeschrägten Zähnen, welches beim Rückwärtstreten in einen Federhebel einhakt und so die Kraft auf die Bremsen durch Seilzug, Gestänge oder Hydraulik überträgt.

Rücktrittbremsen wurden bei Fahrrädern mit Kettenschaltungbisher nicht für möglich gehalten; da bei diesen Schaltungen die Kraft nicht rückwärtig über die Kette übertragen werden kann. Daher sind konventionelle Rücktrittbremsen, bei welchen die Kraft über die Kette auf die Hinterradnabe übertragen wird, bei Fahrrädern mit Kettenschaltung nicht realisierbar.

Zweifellos bedeutet aber eine Rücktrittbremse einen erheblichen Sicherheitsvorteil, da die Füße immer auf den Pedalen sind und der Bremsvorgang in der Regel schneller eingeleitet werden kann als mit einer Handbremse.

Aus diesem Grunde müssen Radfahrer, welche entweder sehr sicherheitsbewußt sind oder welche im Umgang mit Handbremsen eine gewisse Unsicherheit verspüren, auf die zweifellos vorhandenen großen Vorteile einer Kettenschaltung verzichten.

Hier will die Erfindung nun Abhilfe schaffen. Sie ermöglicht es, den Bremsvorgang genau wie bei einer konventionellen Rücktrittbremse auszuführen, ohne daß die Kette zur Kraftübertragung benötigt wird.

Die durch die Erfindung erreichten Vorteile bestehen einerseits darin, daß bei Fahrrädern mit Kettenschaltung nun ein erheblicher Vorteil in der Handhabung und Verkehrssicherheit des Fahrrades entsteht und zweitens, daß Personen, die aus Sicherheitsgründen nicht auf eine Rücktrittbremse verzichten wollen, nun in die Lage versetzt werden, trotzdem die Vorteile einer Kettenschaltung nutzen zu können.

Im folgenden wird die Erfindung anhand von Zeichnungen naher erläutert, welche nur einen Ausführungsweg darstellen.

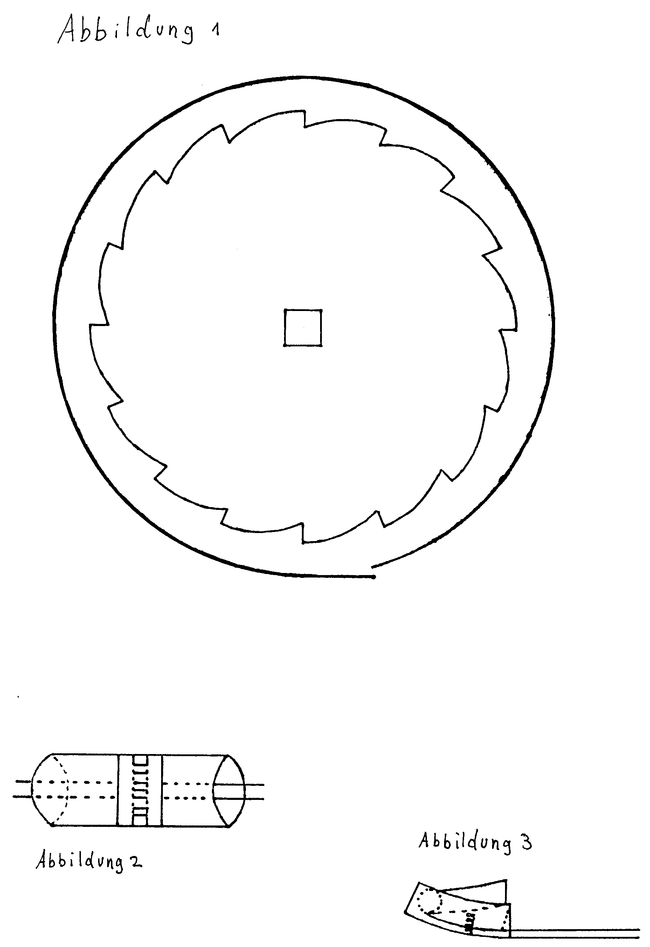

Die Abbildung 1 zeigt die Seitansicht eines Zahnrades mit abgeschrägten Zähnen, welches auf der Tretlagerachse läuft. Die Abbildung 2 zeigt dasselbe Zahnrad in Aufsicht, dabei wird sichtbar, daß das Zahnrad von zwei glatten Seitenteilen mit größerem Durchmesser eingefaßt wird, dadurch entsteht um das Zahnrad herum ein freier Raum, in welchem ein Schlitten mit Federteil laufen kann ohne seitlich ausweichen zu können.

Durchmesser von Zahnrad und Seitenteilen sind natürlich variabel, da sie an die verschiedenen Tretlagerdurchmesser angepaßt werden müssen. Ebenso ist die Anzahl der Zähne variabel.

Die Abbildung 3 zeigt den Schlitten mit Federkeil in der Seitenansicht, welcher bei Betätigung des Rücktrittes in das Zahnrad einhakt und die Kraftübertragung auf die Bremse gewährleistet. In Abbildung 3 ist der Federkeil, welcher um eine Achse drehbar ist, bei hochgedrückter Feder ausgeklappt dargestellt. Am Ende des Schlittens ist ein entsprechend zug- und reißfest dimensioniertes Stahlseil oder auch eine Kette angebracht, welche die Rücktrittkraft auf die Bremse überträgt.

Statt eines laufenden Schlittens kann auch eine Zahnstange durch das Tretlager geführt werden. Die Zahnstange wird dann durch eine Feder an das Zahnrad im Tretlager gedrückt.

Es ist auch möglich, Schlitten oder Zahnstange an der Oberseite des Tretlagers anzubringen, so daß die Schwerkraft die Aufgabe einer Feder übernimmt, so daß diese dann nicht nötig wird. Die Kraftübertragung kann auf jede mögliche Art von Bremse erfolgen:

Zum Beispiel Trommelbremse, Scheibenbremse sowie jegliche Art von Felgenbremse.

## Patentansprüche

1. Vorrichtung für Fahrräder zur Übertragung von Bremskräften vom Tretlager auf beliebige Arten von Bremsen. Kernstück der Vorrichtung ist ein Zahnrad mit abgeschrägten Zähnen im Tretlager, von welchem aus die Bremskräfte mittels eines Schlittens mit federndem Keil oder mittels einer Zahnstange aufgenommen und übertragen werden. Die weitere Übertragung der Bremskräfte kann mittels Seilzug, Kettenzug oder Gestänge vorgenommen werden.
